# EUROPÄISCHE PATENTSCHRIFT

(11) **EP 0 586 902 B1**
(45) Veröffentlichungstag und Bekanntmachung des Hinweises auf die Patenterteilung: **22.01.1997**
(21) Anmeldenummer: 93112718.7
(22) Anmeldetag: 09.08.1993
(51) Int. Cl.: G01N 25/72

(54) **Messanordnung zur berührungslosen Bestimmung der Dicke und/oder thermischen Eigenschaften von Folien und dünnen Oberflächenschichten**
Contactless measurement device of thickness and/or thermal properties of foils and thin surface layers
Dispositif de mesure sans contact de l'epaisseur et/ou des propriétés thermiques de feuilles ou de couches minces superficielles

(30) Priorität: 08.09.1992 DE 4230036
(43) Veröffentlichungstag der Anmeldung: 16.03.1994
(73) Patentinhaber: SIEMENS AKTIENGESELLSCHAFT, 80333 München (DE)
(72) Erfinder: Baumann, Joachim, Dr., D-81925 München (DE); Beyfuss, Martin, Dipl.-Phys., D-81379 München (DE)

(56) Entgegenhaltungen:
- EP-A- 0 105 078
- DE-A- 3 737 426
- DE-A- 3 939 877

## Beschreibung

Das Prinzip der Dickenbestimmung von Folien und dünnen Oberflächenbeschichtungen mit Hilfe der instationären Wärmeleitung ist seit langem bekannt. Es beruht darauf, bei einer zeitlich veränderlichen Aufheizung einer Probenoberfläche den daraus resultierenden zeitlichen Verlauf der Oberflächentemperatur auszuwerten. Es läßt sich zeigen, daß der zeitliche Verlauf der Temperatur nach einer zeitlich definierten Aufheizung empfindlich von der Dicke sowie von den thermischen Kenngrößen einer Schicht oder Folie abhängt. Im Prinzip kann die Aufheizung dabei einen zeitlichen Verlauf haben, der zwischen einem Einzelimpuls und einer periodischen sinusförmigen Form liegt. Ist die Anregung periodisch, so stellt sich die Temperaturoszillation hinsichtlich Amplitude und Phase in charakteristischer Weise ein.

Eine Meßanordnung der eingangs genannten Art ist beispielsweise aus Z. Werkstofftech. 15, 140-148 (1984) bekannt. Bei der dort dargestellten Versuchsanordnung wird die von einem Laser erzeugte und in einem nachgeordneten Modulator in der Intensität periodisch veränderte Heizstrahlung auf das Meßobjekt gerichtet. Die absorbierte Heizstrahlung erzeugt dann sog. Wärmewellen, die von Grenzflächen im Probeninneren reflektiert werden. Diese reflektierten Wärmewellen werden dann an der Oberfläche des Meßobjekts über die resultierende Modulation der thermischen Emission nachgewiesen. Hierzu wird ein Infrarot-Detektor verwendet, dessen Ausgangssignal in einem phasenempfindlichen Lock-In-Verstärker mit dem Referenzsignal des Modulators verglichen wird. Der derart ermittelte Phasenunterschied ergibt dann Aufschluß über die jeweilige Schichtdicke, wobei durch einen Schiebeschlitten auch eine lokale Ortsauflösung ermöglicht wird.

Aus der EP-A-0 105 078 oder der DE-A-39 39 877 sind Meßanordnungen zur berührungslosen Bestimmung der Dicke und/oder thermischen Eigenschaften von Folien und dünnen Oberflächenbeschichtungen bekannt, bei welchen die Heizeinrichtung, welche die auf das Meßobjekt gerichtete Heizstrahlung erzeugt, und der Strahlungsempfänger, der die vom angeregten Meßobjekt emittierte thermische Strahlung empfängt, jeweils über flexible Lichtleiter mit einem beweglich angeordneten Meßkopf verbunden sind. In dem Meßkopf befindet sich ein in den Strahlengang von Heizstrahlung und thermischer Strahlung eingefügter Strahlteiler, der entgegengesetzte Strahlungsrichtungen der auf das Meßobjekt einfallenden Heizstrahlung und der vom Meßobjekt emittierten thermischen Strahlung ermöglicht. In der DE-A-39 39 877 ist über diesen Strahlteiler ausgesagt, daß er die Heizstrahlung zumindest weitgehend reflektieren und die thermische Strahlung zumindest weitgehend transmittieren soll und vorzugsweise durch eine dielektrische Reflexionsbeschichtung auf einem Substrat aus Saphir oder Calciumfluorid gebildet ist. Dabei soll die dielektrische Reflexionsbeschichtung eine nahezu vollständige Reflexion der Heizstrahlung bewirken, wobei die verbleibende transmittierte Heizstrahlung von Saphir oder Calciumfluorid nicht absorbiert wird und damit keine störenden Erwärmungen verursacht.

Bei der Messung von thermischer Strahlung im Infrarot-Bereich, die durch Bestrahlung von Meßobjekten mit einer beispielsweise im sichtbaren Spektralbereich liegenden Heizstrahlung angeregt wird, muß die anregende Heizstrahlung aufgrund neuerer Erkenntnisse extrem stark unterdruckt werden, damit die Meßanordnung erfolgreich und mit hoher Genauigkeit beispielsweise für die Schichtdickenbestimmung eingesetzt werden kann. Diese Erkenntnisse beruhen auf der folgenden Abschätzung:

Beleuchtet man ein Meßobjekt mit etwa 1 W modulierter Heizstrahlung auf einer Fläche von 1 cm², so entstehen typischerweise Schwankungen der vom angeregten Meßobjekt emittierten thermischen Strahlung von nur einigen µW. Als Zahlenwert soll hier 10 µW und somit ein für die folgenden Betrachtungen ungünstiger Fall angenommen werden. Gelangt nur ein geringer Bruchteil der vom Meßobjekt in Form von Streulicht zurückgeworfenen Heizstrahlung, z. B. nur 1 %, also 10 mW auf den Strahlungsempfänger für die thermische Strahlung, so würde das Verhältnis von erwünschter Strahlung zu unerwünschter Strahlung bestenfalls 1 : 1000 sein, da die unerwünschte Strahlung zeitlich kohärent zum Nutzsignal ist und sich somit in Lock-In-Technik nicht unterdrücken läßt. Um präzise zu messen, benötigt man aber ein Verhältnis von 100 : 1. Die geforderte Unterdrückung der vom Meßobjekt zurückgeworfenen anregenden Heizstrahlung beträgt demnach etwa 10⁵, wobei in der Praxis jedoch ein Faktor von 10⁴ genügt, da der Strahlungsempfänger typischerweise zehnmal unempfindlicher für die anregende Heizstrahlung im sichtbaren Spektralbereich als für die vom Meßobjekt emittierte thermische Strahlung ist.

Die vorstehend aufgeführten Anforderungen sind nicht alleine durch spezielle dielektrische Beschichtungen eines Strahlteilers zu erreichen. Nach Angaben eines Herstellers derartiger Beschichtungen ist eine breitbandige Reflexion im Spektralbereich der anregenden Heizstrahlung von höchstens etwa 98 % bei gleichzeitiger hoher Transmission der thermischen Strahlung im Infrarot-Bereich technisch erreichbar. Erforderlich waren aber 99,999 % Reflexion für die anregende Heizstrahlung.

Der im Anspruch 1 angegebenen Erfindung liegt das Problem zugrunde, bei der berührungslosen Bestimmung der Dicke und/oder thermischen Eigenschaften von Folien und dünnen Oberflächenbeschichtungen mittels instationärer Wärmeleitung eine extrem starke Unterdrückung der vom Meßobjekt zurückgeworfenen anregenden Heizstrahlung zu gewährleisten.

Bei der erfindungsgemäßen Meßanordnung trifft der vom Meßobjekt zurückgeworfene Anteil der anregenden Heizstrahlung zunächst auf den ersten Strahlteiler, der bei einer technisch erreichbaren Reflexion von 98 % nur noch 2 % transmittiert. Von dieser transmittierten Intensität von 2 % werden im zweiten Strahlteiler dann wieder 98 % reflektiert und 2 % transmittiert. Bei insgesamt drei hintereinander geschalteten Strahlteilern wird somit die geforderte Unterdrückung der vom Meßobjekt zurückgeworfenen Heizstrahlung um einen Faktor von 10⁴ noch übertroffen.

Vorteilhafte Ausgestaltungen der Erfindung sind in den Ansprüchen 2 bis 4 angegeben.

Die Ausgestaltung gemaß Anspruch 2 ermöglicht die Verwendung von Substraten, die sowohl im Bereich der anregenden Heizstrahlung im Wellenlängenbereich zwischen 0,25 µm und 2,5 µm als auch im Bereich der vom angeregten Meßobjekt emittierten thermischen Strahlung im Wellenlängenbereich zwischen 3 µm und 15 µm transparent sind. Dabei führt die transmittierte Restintensitat der thermischen Strahlung zu keiner Erwärmung der Substrate. Gemäß Anspruch 3 sind im Hinblick auf diese Anforderungen Substrate aus Zinkselenid, Calciumfluorid oder Saphir besonders gut geeignet.

Gemäß Anspruch 4 sind die Strahlteiler vorzugsweise geneigt zur Richtung der thermischen Strahlung angeordnet, so daß der jeweils reflektierte Anteil der vom Meßobjekt zurückgeworfenen Heizstrahlung problemlos in seitlicher Richtung reflektiert werden kann.

Ein Ausführungsbeispiel der Erfindung ist in der Zeichnung dargestellt und wird im folgenden näher beschrieben.

Es zeigen:
Figur 1 eine Meßanordnung zur berührungslosen Bestimmung der Dicke von Folien und Oberflächenbeschichtungen und
Figur 2 die Strahlführung von Heizstrahlung und thermischer Strahlung im Bereich der drei hintereinander geschalteten Strahlteiler der Meßanordnung gemäß Figur 1.

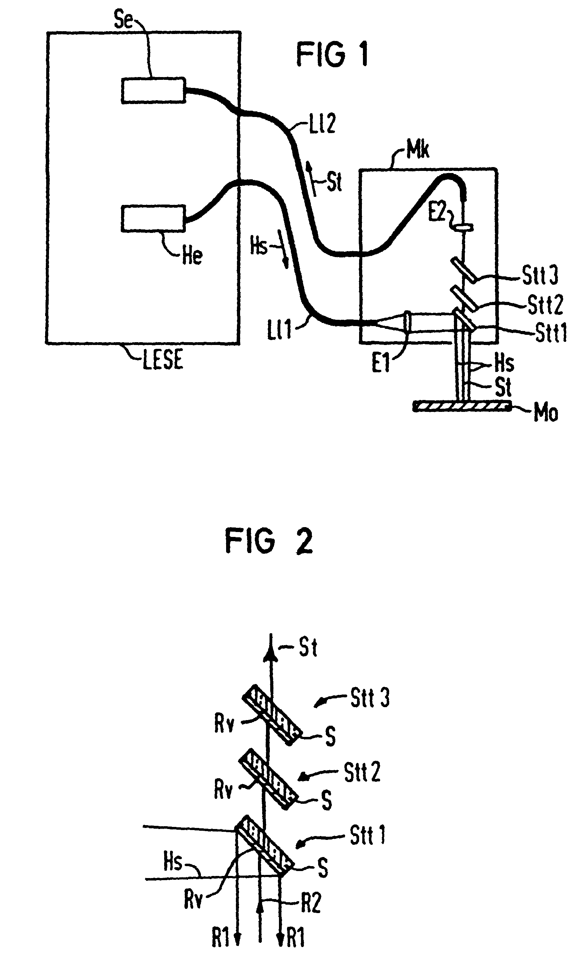

Mit der in Figur 1 in stark vereinfachter schematischer Darstellung aufgezeigten Meßanordnung soll an einem mit Mo bezeichneten Meßobjekt beispielsweise die Dicke einer auf Stahlblech aufgebrachten Lackschicht gemessen werden. Hierzu wird zunächst die in der Heizeinrichtung He einer stationären Licht/Elektronik/Strahlungsempfänger-Einheit LESE erzeugte intensitätsmodulierte Heizstrahlung Hs auf die Oberfläche des Meßobjekts Mo gerichtet. Für die Übertragung der Heizstrahlung Hs sind ein erster flexibler Lichtleiter Ll 1, ein erstes abbildendes Element E1 und ein erster Strahlteiler Stt 1 vorgesehen. Die in der Lackschicht des Meßobjekts Mo absorbierte Heizstrahlung Hs bewirkt an der Oberfläche eine Temperaturoszillation, die über die entsprechend emittierte thermische Strahlung St von einem ebenfalls in der stationären Licht/Elektronik/Strahlungsempfänger-Einheit LESE untergebrachten Strahlungsempfänger Se erfaßt wird. Die emittierte thermische Strahlung St gelangt über den ersten Strahlteiler Stt1, einen zweiten Strahlteiler Stt2 und einen dritten Strahlteiler Stt3 zu einem zweiten abbildenden Element E2, welches die thermische Strahlung St auf einen zweiten flexiblen Lichtleiter Ll2 abbildet, der die thermische Strahlung St dann zum Strahlungsempfänger Se weiterleitet. Innerhalb des mit Mk bezeichneten Meßkopfes befinden sich also nur die beiden Enden der Lichtleiter Ll1 und Ll2, die beiden abbildenden Elemente E1 und E2 und die drei Strahlteiler Stt1, Stt2 und Stt3.

Die Signalverarbeitung erfolgt in der Licht/Elektronik/Strahlungsempfänger-Einheit LESE beispielsweise spielsweise so, wie es in der z. Werkstofftech. 15, 140-148 (1984) oder der DE-A-36 31 652 beschrieben ist.

Aus Figur 2 ist die Strahlführung von Heizstrahlung Hs und thermischer Strahlung St im Bereich der drei Strahlteiler Sttl, Stt2 und Stt3 ersichtlich. Diese drei Strahlteiler Sttl, Stt2 und Stt3 bestehen jeweils aus einem Substrat S, das auf seiner dem Meßobjekt Mo (vgl. Figur 1) zugewandten Seite eine dielektrische Reflexionsbeschichtung Rv trägt. Diese dielektrische Reflexionsbeschichtung Rv des ersten Strahlteilers Sttl lenkt die im dargestellten Beispiel unter einem Winkel von 45° einfallende Heizstrahlung Hs in der im wesentlichen senkrechten Richtung R1 auf die Oberfläche des Meßobjekts Mo. Die vom Meßobjekt Mo emittierte thermische Strahlung St wird dann innerhalb des Strahlkegels des relativ schwach fokussierten Heizstrahles Hs in entgegengesetzter Richtung R2 zum ersten Strahlteiler Sttl geführt. Dieser erster Strahlteiler Sttl und die beiden nachfolgenden Strahlteiler Stt2 und Stt3 transmittieren die emittierte thermische Strahlung St, so daß sie durch das bereits erwähnte zweite abbildende Element E2 auf den zweiten flexiblen Lichtleiter L12 abgebildet werden kann. Durch die entgegengesetzten Richtungen R1 und R2 von Heizstrahlung Hs und thermischer Strahlung St können Translationen und Kippbewegungen des Meßobjekts Mo toleriert werden, sofern bei letzteren der Mittelpunkt des Heizstrahlungsfleckes auf der Oberfläche des Meßobjekts Mo nicht verschoben wird.

Die anregende Heizstrahlung Hs kann im Wellenlängenbereich zwischen 0,25 µm und 2,5 µm liegen, während die vom angeregten Meßobjekt Mo emittierte thermische Strahlung St im Wellenlängenbereich zwischen 3 µm und 15 µm liegen kann. An die dielektrische Reflexionsbeschichtung Rv und das Substrat S jedes der drei hintereinander geschalteten Strahlteiler Sttl, Stt2 und Stt3 werden dabei folgende Anforderungen gestellt:
- Die dielektrische Reflexionsbeschichtung Rv soll die anregende Heizstrahlung Hs möglichst weitgehend reflektieren.
- Die dielektrische Reflexionsbeschichtung Rv soll die emittierte thermische Strahlung St zumindest weitgehend transmittieren.
- Das Substrat S soll die emittierte thermische Strahlung St zumindest weitgehend transmittieren.
- Das Substrat S soll die anregende Heizstrahlung Hs zumindest weitgehend transmittieren.

Die vorstehenden Anforderungen werden im Hinblick auf die dielektrische Reflexionsbeschichtung Rv durch die üblichen, vorzugsweise mehrschichtig aufgebauten Beschichtungen erfüllt. Geeignete Beschichtungen gehen beispielweise aus R.D. Hudson: "Infrared Systems Engineering", Verlag John Wiley & Sons, New York, 1969, S. 219, Table 5.4 hervor.

Die an das Substrat S gestellten Anforderungen werden durch Zinkselinid, Calciumfluorid und Saphir als Substratmaterialien erfüllt, die sowohl optisch als auch infrarotoptisch transparent sind.

Bei der erfindungsgemäßen Anordnung von insgesamt drei hintereinander geschalteten Strahlteilern Sttl, Stt2 und Stt3 im Meßkopf Mk wird der von der Oberfläche des Meßobjekts Mo zurückgeworfene Anteil der Heizstrahlung Hs zu etwa 98 % an der dielektrischen Reflexionsbeschichtung Rv des ersten Strahlteilers Sttl reflektiert. Die dann noch transmittierte Intensität wird an der dielektrischen Reflexionsbeschichtung Rv des zweiten Strahlteilers Stt2 wieder zu etwa 98 % reflektiert. Die vom zweiten Strahlteiler Stt2 noch transmittierte Restintensitat wird dann an der dielektrischen Reflexionsbeschichtung Rv des dritStrahlteilers Stt3 wieder zu etwa 98 % reflektiert, d. h. die Transmission der vom Meßobjekt Mo zurückgeworfenen Heizstrahlung Hs beträgt nach drei hintereinander geschalteten Strahlteilern Stt1, Stt2 und Stt3 noch 0,02³. Die erforderliche Unterdrückung der anregenden Heizstrahlung Hs um den Faktor 10⁴ wird somit deutlich überschritten. Durch diese extrem starke Unterdrückung der anregenden Heizstrahlung Hs können Messungen, wie z. B. Schichtdickenmessungen, mit sehr hoher Genauigkeit durchgeführt werden.

## Patentansprüche

1. Meßanordnung zur berührungslosen Bestimmtung der Dicke und/oder thermischen Eigenschaften von Folien und dünnen Oberflächenbeschichtungen mittels instationärer Wärmeleitung, mit
- einer Heizeinrichtung (He) zur Erzeugung einer auf das Meßobjekt (Mo) gerichteten zeitlich intensitätsmodulierten Heizstrahlung (Hs),
- einem Strahlungsempfänger (Se) für die vom angeregten Meßobjekt (Mo) emittierte thermische Strahlung (St),
- einem in den Strahlengang von Heizstrahlung (Hs) und thermischer Strahlung (St) eingefügten ersten Strahteiler (Stt1) sowie
- einem zweiten Strahlteiler (Stt2) und einem dritten Strahlteiler (Stt3), die hinter dem ersten Strahlteiler (Stt1) in den Strahlengang der thermischen Strahlung (St) eingefügt sind, wobei
- die drei Strahlteiler (Stt1, Stt2, Stt3) die Heizstrahlung (Hs) zumindest weitgehend reflektieren und die thermische Strahlung (St) zumindest weitgehend transmittieren.

2. Meßanordnung nach Anspruch 1,
**dadurch gekennzeichnet,**
daß die Strahlteiler (Stt1, Stt2, Stt3) jeweils durch eine auf ein Substrat (S) aufgebrachte dielektrische Reflexionsbeschichtung (Rv) gebildet sind, wobei das Substrat (S) die Heizstrahlung (Hs) und die thermische Strahlung (St) zumindest weitgehend transmittiert und wobei die dielektrische Reflexionsbeschichtung (Rv) die Heizstrahlung (Hs) zumindest weitgehend reflektiert und die thermische Strahlung (St) zumindest weitgehend transmittiert.

3. Meßanordnung nach Anspruch 2,
**dadurch gekennzeichnet,**
daß das Substrat (S) aus Zinkselenid, Calciumfluorid oder Saphir besteht.

4. Meßanordnung nach einem der vorhergehenden Ansprüche,
**dadurch gekennzeichnet,**
daß die Strahlteiler (Stt1, Stt2, Stt3) zur Richtung (R2) der thermischen Strahlung (St) geneigt angeordnet sind.

## Claims

1. Measuring arrangement for the non-contact determination of the thickness and/or thermal properties of films and thin surface coatings by means of non-steady-state heating, having
- a heating device (He) for the generation of a heat radiation (Hs) which is intensity modulated with time and directed onto the object (Mo) to be measured,
- a radiation receiver (Se) for the thermal radiation (St) emitted by the excited object (Mo) to be measured,
- a first beam splitter (Sttl) inserted into the radiation path of heat radiation (Hs) and thermal radiation (St), as well as
- a second beam splitter (Stt2) and a third beam splitter (Stt3) which are inserted into the radiation path of the thermal radiation (St) downstream of the first beam splitter (Sttl),
- the three beam splitters (Stt1, Stt2, Stt3) at least to a large extent reflecting the heat radiation (Hs) and at least to a large extent transmitting the thermal radiation (St).

2. Measuring arrangement according to Claim 1, characterized in that the beam splitters (Stt1, Stt2, Stt3) are in each case formed by a dielectric reflection coating (Rv) applied to a substrate (S), the substrate (S) at least to a large extent transmitting the heat radiation (Hs) and the thermal radiation (St), and the dielectric reflection coating (Rv) at least to a large extent reflecting the heat radiation (Hs) and at least to a large extent transmitting the thermal radiation (St).

3. Measuring arrangement according to Claim 2, characterized in that the substrate (S) consists of zinc selenide, calcium fluoride or sapphire.

4. Measuring arrangement according to one of the preceding claims, characterized in that the beam splitters (Stt1, Stt2, Stt3) are arranged inclined to the direction (R2) of the thermal radiation (St).

## Revendications

1. Dispositif de mesure sans contact de l'épaisseur et/ou des propriétés thermiques de feuilles ou de couches minces superficielles par conduction thermique non stationnaire, comprenant
- une installation de chauffage (He) pour produire un rayonnement de chauffage (Hs) dirigé vers l'objet à mesurer (Mo) et modulé temporellement en intensité,
- un récepteur de rayonnement (Se) sensible au rayonnement thermique (St) émis par l'objet à mesurer (Mo) excité,
- un premier séparateur de faisceaux (Stt1) placé dans le trajet du rayonnement de chauffage (Hs) et du rayonnement thermique (Se), ainsi que
- un deuxième séparateur de faisceaux (Stt2) et un troisième séparateur de faisceaux (Stt3) placés derrière le premier séparateur de faisceaux (Stt1) dans le trajet du rayonnement thermique (St),
- les trois séparateurs de faisceaux (Stt1, Stt2, Stt3) refléchissant au moins largement le rayonnement de chauffage (Hs) et transmettant au moins largement le rayonnement thermique (St).

2. Dispositif de mesure selon la revendication 1,
**caractérisé en ce que**
les séparateurs de faisceaux (Stt1, Stt2, Stt3) se composent chacun d'une couche réflectrice (Rv) diélectrique appliquée sur un substrat (S), le substrat (S) transmettant au moins largement le rayonment de chauffage (Hs) et le rayonnement thermique (St) et la couche réflectrice (Rv) diélectrique refléchissant au moins largement le rayonnement de chauffage (Hs) et transmettant au moins largement le rayonnement thermique (St).

3. Dispositif de mesure selon la revendication 2,
**caractérisé en ce que**
le substrat (S) se compose de séléniure de zinc, de fluorure de calcium ou de saphir.

4. Dispositif de mesure selon l'une des revendications précédentes,
**caractérisé en ce que**
les séparateurs de faisceaux (Stt1, Stt2, Stt3) ont une position inclinée par rapport à l'orientation (R2) du faisceau du rayonnement thermique (St).
